# EUROPÄISCHE PATENTANMELDUNG

(11) **EP 3 246 608 A1**
(43) Veröffentlichungstag der Anmeldung: **22.11.2017**
(21) Anmeldenummer: 16170053.9
(22) Anmeldetag: 18.05.2016
(51) Int. Cl.: F16L 5/04, A62C 2/06, E04G 15/06, F16L 5/10, H02G 3/04, H02G 3/22

(54) **BRANDSCHUTZELEMENT SOWIE VERFAHREN ZUR HERSTELLUNG EINES BRANDSCHUTZELEMENTS**

(71) Anmelder: HILTI Aktiengesellschaft, 9494 Schaan (LI)
(72) Erfinder: Förg, Christian, 86862 Lamerdingen (DE)
(74) Vertreter: Hilti Aktiengesellschaft Corporate Intellectual Property

(57) **Zusammenfassung**

Ein Brandschutzelement (10) mit einem im Wesentlichen zylindrischen Gehäuse (12) ist beschrieben, das eine Innenseite (20) hat, die einen Kanal (18) für zumindest eine Leitung und/oder ein Rohr definiert. Ein intumeszierendes Material (22) ist zumindest abschnittsweise direkt an die Innenseite (20) des Gehäuses (12) angespritzt, insbesondere direkt an die Innenseite (20) geschäumt ist. Ferner ist ein Verfahren zur Herstellung eines Brandschutzelements (10) beschrieben.

## Beschreibung

Die Erfindung betrifft ein Brandschutzelement sowie ein Verfahren zu dessen Herstellung.

Typischerweise werden Brandschutzelemente beim Bau von Gebäuden eingesetzt, um eine Leitungsdurchführung für eine Leitung und/oder ein Rohr durch eine Wand bzw. eine Decke bereitzustellen und gleichzeitig zwei durch die Wand bzw. die Decke voneinander getrennte Räume aus brandschutztechnischer Sicht voneinander zu isolieren.

Das Brandschutzelement weist hierzu ein intumeszierendes Material auf, welches im Brandfall aufgrund der ansteigenden Temperatur expandiert und so die Leitungsdurchführung verschließt, wodurch die Ausbreitung von Feuer durch diese Öffnung verhindert oder zumindest verzögert wird. Dies stellt die entsprechende Brandschutzfunktion des Brandschutzelements dar.

Darüber hinaus verhindern Brandschutzelemente, dass Rauch über die Durchführung in der Wand bzw. der Decke von einem Raum zu einem benachbarten Raum gelangt. Hierzu ist üblicherweise ein Dichtungselement vorgesehen, wie eine Gummilippe oder ähnliches.

Brandschutzelemente müssen demnach Eigenschaften wie Dichtigkeit gegen Rauch, mechanische Robustheit und eine entsprechende Brandschutzfunktion aufweisen, die eine Ausbreitung des Feuers verhindert.

Üblicherweise werden Brandschutzelemente als sogenannte Cast-In-, Drop-In- oder Wall-Sleeve-Produkte verwendet. Die jeweilige Produktart hängt vom vorgesehenen Einsatzgebiet ab, insbesondere ob das Produkt beim Gießen einer Betonwand bzw. einer Betondecke oder in eine bestehende Betonwand bzw. Betondecke eingesetzt wird.

Aufgrund der unterschiedlichen Anwendungsgebiete sowie dem generellen Einsatz auf einer Baustelle müssen die Brandschutzelemente eine gewisse mechanische Steifigkeit aufweisen und gleichzeitig die rauchgasabdichtende Funktion sowie die Brandschutzfunktion aufweisen. Bei den aus dem Stand der Technik bekannten Brandschutzelementen werden daher üblicherweise mehrere Komponenten miteinander verknüpft, die jeweils die entsprechenden Eigenschaften bzw. Funktionen aufweisen, sodass das aus den mehreren Komponenten bestehende Brandschutzelement sämtliche Eigenschaften und Funktionen aufweist.

Die aus dem Stand der Technik bekannten Brandschutzelemente weisen den Nachteil auf, dass sie in aufwendiger Weise miteinander verbunden werden müssen, insbesondere erst am Einsatzort. Dies erhöht den Montageaufwand, was allgemein zu höheren Kosten führt.

Die Aufgabe der Erfindung besteht darin, ein Brandschutzelement bereitzustellen, das einen geringen Montageaufwand aufweist und kostengünstig herstellbar ist.

Die Aufgabe wird erfindungsgemäß durch ein Brandschutzelement gelöst, mit einem im Wesentlichen zylindrischen Gehäuse, das eine Innenseite hat, die einen Kanal für zumindest eine Leitung und/oder ein Rohr definiert, und wobei ein intumeszierendes Material zumindest abschnittsweise direkt an die Innenseite des Gehäuses angespritzt ist, insbesondere direkt an die Innenseite geschäumt ist.

Der Grundgedanke der Erfindung ist es, den Montageaufwand des Brandschutzelements dadurch zu reduzieren, dass das intumeszierende Material direkt mit dem Gehäuse verbunden wird, sodass eine nachträgliche Montage des intumeszierenden Materials am Gehäuse des Brandschutzelements nicht erforderlich ist. Der Anwender des Brandschutzelements kann dieses direkt verwenden, ohne weitere Montageschritte vorzunehmen bzw. das Brandschutzelement zunächst zusammenzubauen. Das Gehäuse dient demnach als eine Art verlorene Schalung für das intumeszierende Material. Zudem ergibt sich ein einfach herzustellendes und kostengünstiges Brandschutzelement, da das intumeszierende Material direkt mit der Innenseite verbunden ist.

Gemäß einem Aspekt ist das intumeszierende Material stoffschlüssig mit der Innenseite des Gehäuses verbunden, insbesondere haftet das intumeszierende Material haftmittelfrei an der Innenseite. Die verwendeten Materialien können somit reduziert werden, da lediglich die für die Brandschutzfunktion relevanten Materialien verwendet werden, also das intumeszierende Material sowie das formgebende Gehäuse. Ein Haftmittel oder Ähnliches muss nicht verwendet werden, um das intumeszierende Material am Gehäuse zu befestigen, da dieses direkt mit der Innenseite des Gehäuses verbunden wird. Die Herstellung des Brandschutzelements ist dementsprechend kostengünstig.

Insbesondere handelt es sich bei dem intumeszierenden Material um einen intumeszierenden Schaumstoff. Ein intumeszierender Schaumstoff ist besonders gut als ein im Kanals der Leitungs- bzw. Rohrdurchführung angeordnetes intumeszierendes Material geeignet, da der Schaumstoff gut komprimierbar ist und gute elastische Rückstelleigenschaften aufweist. Zudem kann über den Schaumstoff ein großes Volumen mit geringem Materialeinsatz des verhältnismäßig teuren intumeszierenden Materials bereitgestellt werden.

Ein weiterer Aspekt der Erfindung sieht vor, dass das Gehäuse wenigstens eine seitliche Vertiefung an der Innenseite aufweist, die unter anderem als ein Aufnahmeabschnitt für das intumeszierende Material dient. Das intumeszierende Material kann zusätzlich von der seitlichen Vertiefung abgestützt werden, sofern das intumeszierende Material nicht wie gewünscht an der Innenseite des Gehäuses haftet. Insbesondere kann vorgesehen sein, dass das intumeszierende Material formschlüssig in der seitlichen Vertiefung aufgenommen ist. Generell ist es somit möglich, Materialien für das Gehäuse zu verwenden, an denen das intumeszierende Material normalerweise nicht ausreichend haftet, da der Aufnahmeabschnitt eine zusätzliche Stützung bietet.

Gemäß einer Ausführungsform ist ein zusätzlicher Brandschutzstreifen an der Innenseite befestigt, insbesondere in der seitlichen Vertiefung. Der zusätzliche Brandschutzstreifen stellt eine ausreichende Brandschutzfunktion des Brandschutzelements sicher, insbesondere dann, wenn im intumeszierenden Material nicht ausreichend Brandschutzadditive untergebracht werden konnten.

Ein weiterer Aspekt der Erfindung sieht vor, dass das intumeszierende Material ein Dichtungselement im Kanal ausbildet, insbesondere eine Dichtmembran. Das intumeszierende Material sorgt demnach gleichzeitig für eine Abdichtung des Kanals, sodass im Brandfall kein Rauch durch den Kanal von einem Raum über die entsprechende Wand bzw. Decke in den benachbarten Raum gelangen kann. Es wird entsprechend nur ein Material verwendet, um die Dichtigkeit und die Brandschutzfunktion gleichzeitig bereitzustellen, nämlich das intumeszierende Material.

Generell ist aufgrund der Verwendung des intumeszierenden Materials als im Kanal angeordneten Dichtungselement sichergestellt, dass das intumeszierende Material direkt an der richtigen Position in der Rohr- bzw. Leitungsdurchführung vorgesehen ist. Das intumeszierende Material muss demnach beim Expandieren im Brandfall keine lange Wegstrecke zurücklegen, um die Rohr- bzw. Leitungsdurchführung zu schließen.

Insbesondere ist das intumeszierende Material derart ausgebildet, dass das intumeszierende Material den Kanal vollständig schließt. Die entsprechende Dichtfunktion wird demnach auch bereitgestellt, wenn keine Leitung bzw. kein Rohr durch das Brandschutzelement geführt ist, insbesondere dessen Kanal.

Ein Aspekt sieht vor, dass das intumeszierende Material in einer Querschnittsebene des Brandschutzelements eine Dichtebene ausbildet. Die Dichtebene ist der Bereich, in dem das intumeszierende Material insbesondere zusammen mit dem Rohr bzw. der Leitung den Kanal im Wesentlichen gasdicht abdichtet, sodass kein Rauchgas über die Dichtebene durch den Kanal gelangen kann. Generell kann das intumeszierende Material demnach so geformt sein, dass möglichst wenig Material verwendet wird, um dennoch eine Dichtigkeit des Brandschutzelements bereitzustellen. Dies wird in einfacher Weise dadurch erreicht, dass das intumeszierende Material zumindest in einer Querschnittsebene des Brandschutzelements den Querschnitt des Kanals zumindest im Wesentlichen schließt.

Ein weiterer Aspekt der Erfindung sieht vor, dass das intumeszierende Material einen Bereich mit geringerer Materialstärke in axialer Richtung aufweist, wobei der Bereich als Sollbruchstelle oder Durchstoßstelle dient. Im entsprechenden Bereich kann ein Anwender des Brandschutzelements ein Kabel oder eine Leitung in einfacher Weise durch das Brandschutzelement führen, insbesondere durch das intumeszierende Material. Hierzu muss er lediglich den entsprechenden Bereich mit der Leitung bzw. dem Rohr mechanisch durchstoßen. Dies ist möglich, da das Material im entsprechenden Bereich materialschwach ausgebildet ist.

Gemäß einer Ausführungsform erstreckt sich das intumeszierende Material von der Innenseite in zentripetaler Richtung zur Mitte des Kanals, insbesondere in einer Querschnittsebene des Brandschutzelements. Hierdurch kann sich eine Dichtebene aus durchgehendem intumeszierenden Material ausbilden, sodass das Dichtungselement eine Dichtmembran darstellt. Vorzugsweise liegt die Dichtebene im Bereich mit geringerer Materialstärke.

Alternativ schließt das intumeszierende Material den Kanal nur teilweise in einer Querschnittsebene des Brandschutzelements. Beispielsweise bleibt mittig ein Bereich ausgespart, sodass das intumeszierende Material eine Dichtlippe ausbildet, die mit ihrem vorzugsweise dehnbaren freien Rand eine Führung für das Rohr und/oder die zumindest eine Leitung ausbildet.

Die Dichtebene kann durch die Dichtlippe oder durch das sich in zentripetaler Richtung bis zur Mitte des Kanals erstreckende intumeszierende Material gebildet sein.

Das Gehäuse kann aus einem biegesteifen Material gebildet sein, insbesondere aus einem Kunststoff wie Polyethylen oder Polypropylen, sodass das Gehäuse stabilisierend ist. Das Gehäuse dient demnach lediglich zur Formgebung des Brandschutzelements, sodass dieses den Anforderungen einer Baustelle gerecht wird und dort verwendet werden kann. Des Weiteren kann das Gehäuse und somit das Brandschutzelement kostengünstig hergestellt werden.

Gemäß einer Ausführungsform weist das Gehäuse zumindest eine Öffnung auf, die in den Kanal mündet, insbesondere zwei Öffnungen, die über den Kanal miteinander in Verbindung stehen. Somit ist das Gehäuse schnell einsetzbar und die Leitung bzw. das Rohr in einfacher Weise durchführbar.

Ergänzend oder alternativ kann zumindest ein axiales Ende des Gehäuses mit einem Trennelement oder Deckel vorübergehend geschlossen sein, welches bzw. welcher herausgetrennt oder herausgebrochen werden kann, um die Öffnung am entsprechenden axialen Ende auszubilden. Dies ist insbesondere dann von Bedeutung, wenn das Brandschutzelement als ein sogenanntes Cast-In-Produkt beim Gießen der Betonwand bzw. der Betondecke verwendet wird. Das Trennelement bzw. der Deckel dient demnach als Schutz vor dem flüssigen Beton, sodass dieser beim Gießen der Wand bzw. der Decke nicht in den Kanal des Brandschutzelements fließen kann.

Ein weiterer Aspekt sieht vor, dass das Gehäuse in axialer Richtung gesehen wenigstens einen Hinterschnitt an seiner Außenseite aufweist, über den das Brandschutzelement an einem herzustellenden Bauteil befestigbar ist. Der Hinterschnitt dient zur Befestigung des Brandschutzelements während des Gießens des herzustellenden Bauteils, also einer Betondecke oder einer Betonwand.

Die Aufgabe der Erfindung wird zudem durch ein Verfahren zur Herstellung eines Brandschutzelements gelöst, wobei ein im Wesentlichen zylindrisches Gehäuse bereitgestellt wird, das zumindest eine Öffnung aufweist, die in einen Kanal mündet, der von einer Innenseite des Gehäuses definiert ist. Ein erstes Profilelement eines Werkzeugs wird in den Kanal eingebracht. Intumeszierendes Material wird in den Kanal eingebracht, sodass es den Kanal in Abhängigkeit von der Form des eingebrachten Profilelements zumindest teilweise füllt. Ein zweites Profilelement des Werkzeugs wird über die zumindest eine Öffnung in den Kanal eingebracht, sodass das Werkzeug geschlossen ist, wobei das zweite Profilelement dem ersten Profilelement gegenüberliegt, sodass das zuvor eingebrachte intumeszierende Material von den beiden Profilelementen eingeklemmt und entsprechend geformt wird. Das intumeszierende Material wird ausgehärtet. Die Profilelemente werden entfernt.

Es ist auch möglich, dass intumeszierendes Material durch Injektion durch das zweite Profilelement in den Kanal einzubringen, nachdem dieses auf das erste Profilelement in den Kanal eingebracht wurde, so dass das intumeszierende Material den Kanal in Abhängigkeit von der Form der eingebrachten Profilelemente füllt.

Hierdurch ist es in einfacher Weise möglich, ein Brandschutzelement zu schaffen, bei dem das intumeszierende Material direkt an die Innenseite des Gehäuses angebracht ist. Das entsprechend hergestellte Brandschutzelement umfasst wenige Komponenten, wodurch dessen Herstellung kostengünstig ist.

Ein Aspekt sieht vor, dass das erste Profilelement über eine zweite Öffnung des Gehäuses eingebracht wird, die an dem der ersten Öffnung entgegengesetzten Ende des Gehäuses vorgesehen ist, insbesondere dem gegenüberliegenden Ende. Dies vereinfacht die Herstellung, da das erste Profilelement in einfacher Weise in den Kanal eingesetzt werden kann.

Alternativ kann das erste Profilelement über die erste Öffnung des Gehäuses eingebracht werden, sodass es zunächst durch den gesamten Kanal bewegt werden muss. Dies ist insbesondere dann eine Herstellungsvariante, wenn das Brandschutzelement einen Deckel bzw. ein Trennelement aufweist, welcher bzw. welches später herausgetrennt oder herausgebrochen wird.

Gemäß einem Aspekt wird das intumeszierende Material an die Innenseite des Kanals angespritzt, insbesondere geschäumt. Dies stellt sicher, dass das intumeszierende Material haftmittelfrei am Gehäuse haftet, sodass eine stoffschlüssige Verbindung hergestellt ist.

Weitere Vorteile und Eigenschaften der Erfindung ergeben sich aus der nachfolgenden Beschreibung und den Zeichnungen, auf die Bezug genommen wird. In den Zeichnungen zeigen:
- Figur 1 eine schematische Schnittdarstellung eines erfindungsgemäßen Brandschutzelements gemäß einer ersten Ausführungsform,
- Figur 2 eine schematische Schnittdarstellung eines erfindungsgemäßen Brandschutzelements gemäß einer zweiten Ausführungsform,
- Figur 3 eine schematische Schnittdarstellung eines erfindungsgemäßen Brandschutzelements gemäß einer dritten Ausführungsform,
- Figur 4 eine schematische Schnittdarstellung eines erfindungsgemäßen Brandschutzelements gemäß einer vierten Ausführungsform,
- Figur 5 eine Perspektivdarstellung eines erfindungsgemäßen Brandschutzelements gemäß einer fünften Ausführungsform,
- Figur 6 eine weitere Perspektivdarstellung des erfindungsgemäßen Brandschutzelements gemäß der Figur 5,
- Figur 7 die erfindungsgemäße Herstellung eines erfindungsgemäßen Brandschutzelements in einem ersten Verfahrensschritt,
- Figur 8 die erfindungsgemäße Herstellung eines erfindungsgemäßen Brandschutzelements in einem zweiten Verfahrensschritt,
- Figur 9 die erfindungsgemäße Herstellung eines erfindungsgemäßen Brandschutzelements in einem dritten Verfahrensschritt, und
- Figur 10 die erfindungsgemäße Herstellung eines erfindungsgemäßen Brandschutzelements in einem vierten Verfahrensschritt.

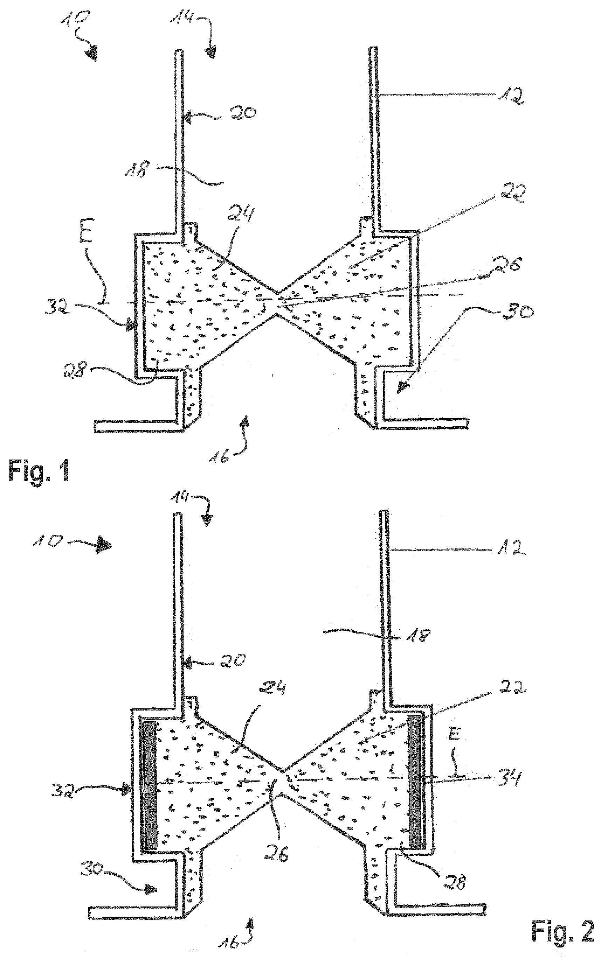

In Figur 1 ist ein Brandschutzelement 10 gezeigt, das ein im Wesentlichen zylindrisches Gehäuse 12 umfasst. Das Brandschutzelement 10 dient dazu, eine Durchführung für ein Rohr bzw. eine Leitung in einem (herzustellenden) Bauteil wie einer Betonwand bzw. einer Betondecke auszubilden, wobei die Durchführung zudem brandschutztechnisch gesichert ist.

Das zylindrische Gehäuse 12 weist eine erste Öffnung 14 sowie eine zweite Öffnung 16 auf, die über einen Kanal 18 miteinander in Verbindung stehen, der von der Innenseite 20 des Gehäuses 12 definiert ist. Der Kanal 18 dient zur Führung zumindest einer Leitung und/oder eines Rohrs, welche bzw. welches durch den Kanal 18 gelegt werden kann.

Das Brandschutzelement 10 umfasst zudem ein intumeszierendes Material 22, welches an die Innenseite 20 des Gehäuses 12 angespritzt ist, sodass es stoffschlüssig mit der Innenseite 20 des Gehäuses 12 verbunden ist.

Das intumeszierende Material 22 ist in der gezeigten Ausführungsform als ein intumeszierender Schaumstoff ausgebildet, sodass das intumeszierende Material 22 gut komprimierbar ist und eine hohe elastische Rückstellbarkeit aufweist.

In der gezeigten Ausführungsform ist das intumeszierende Material 22 als ein Dichtungselement 24 im Kanal 18 ausgebildet, wobei es sich in zentripetaler Richtung von der Innenseite 20 des Gehäuses 12 zur Mitte des Kanals 18 derart erstreckt, dass es den Kanal 18 vollständig schließt.

Dabei ist eine Dichtebene E aus durchgehendem intumeszierenden Material 22 in einer Querschnittsebene des Brandschutzelements 10 ausgebildet. Das die Dichtebene E bildende intumeszierende Material 22 erstreckt sich demnach in der entsprechenden Querschnittsebene des Brandschutzelements 10 vollständig durch den Kanal 18. Insofern kann das vom intumeszierenden Material 22 gebildete Dichtungselement 24 auch als eine Dichtmembran bezeichnet werden.

In der Dichtebene E wird durch das intumeszierende Material 22 in Verbindung mit dem Rohr bzw. der Leitung sichergestellt, dass kein Rauch über den Kanal 18 von einem Raum in einen benachbarten Raum gelangen kann, die über das Brandschutzelement 10 miteinander verbunden sind.

Zudem bildet das intumeszierende Material 22 einen Bereich 26 mit geringerer Materialstärke in axialer Richtung aus, der als Sollbruchstelle bzw. Durchstoßstelle für die Leitung bzw. das Rohr dient. Durch diesen Bereich 26 kann der Anwender des Brandschutzelements 10 die Leitung bzw. das Rohr in einfacher Weise durch das intumeszierende Material 22 hindurchstoßen, sodass es einerseits vom intumeszierenden Material 22 geführt und andererseits von diesem umschlossen ist.

Der Bereich 26 mit geringerer Materialstärke in axialer Richtung liegt in der gezeigten Ausführungsform in der Dichtebene E.

Darüber hinaus weist das Gehäuse 12 in der gezeigten Ausführungsform eine seitliche Vertiefung 28 an der Innenseite 20 auf, die als Aufnahmeabschnitt für das intumeszierende Material 22 dient.

Die seitliche Vertiefung 28 sorgt für eine zusätzliche formschlüssige Verbindung des intumeszierenden Materials 22 im Gehäuse 12, sodass das intumeszierende Material 22 auch dann vom Gehäuse 12 gehalten ist, wenn es nicht mehr an der Innenseite 20 des Gehäuses 12 haften sollte. Hierdurch ist eine dauerhafte positionsgerechte Lagerung des intumeszierenden Materials 22 in Bezug auf das Gehäuse 12 gewährleistet, auch wenn das intumeszierende Material 22 nicht mehr an der Innenseite 20 haftet.

Das intumeszierende Material 22 haftet zudem an weiteren Bereichen der Innenseite 20 des Gehäuses 12, insbesondere an zu der seitlichen Vertiefung 28 benachbarten Bereichen.

Darüber hinaus weist das Gehäuse 12 in axialer Richtung gesehen einen Hinterschnitt 30 an seiner Außenseite 32 auf, insbesondere im Bereich der zweiten Öffnung 16. Über den Hinterschnitt 30 kann das Brandschutzelement 10 an einem herzustellenden Bauteil befestigt werden, insbesondere dessen Schalung. Hierdurch ist es beispielsweise möglich, dass das Brandschutzelement 10 als ein sogenanntes Cast-In-Produkt verwendet wird, das beim Gießen einer Betonwand oder einer Betondecke mit deren Schalung zunächst verbunden wird.

Alternativ kann das Brandschutzelement 10 als ein sogenanntes Wall-Sleeve-oder Drop-In-Produkt verwendet werden. Hierzu kann anstelle des Hinterschnitts 30 ein nach radial außen abstehender Kragen vorgesehen sein, über den das Brandschutzelement 10 auf der Betonwand bzw. der Betondecke aufliegt.

Das Gehäuse 12 kann allgemein aus einem biegesteifen Material gebildet sein, insbesondere aus einem Kunststoff, sodass das Gehäuse 12 eine stabilisierende Wirkung auf das Brandschutzelement 10 ausübt. Insbesondere können Materialien wie Polyethylen oder Polypropylen verwendet werden, die kostengünstig sind, wodurch ein einfach herzustellendes und kostengünstiges Brandschutzelement 10 geschaffen ist.

Bei der Wahl des Materials des Gehäuses 12 muss nicht zwangsläufig darauf geachtet werden, dass das intumeszierende Material 22 eine dauerhaft haftende Verbindung mit dem Gehäuse 12 eingeht, insbesondere dessen Innenseite 20, da das intumeszierende Material 22 unter anderem aufgrund der seitlichen Vertiefung 28 formschlüssig im Gehäuse 12 gehalten ist.

Alternativ kann das Brandschutzelement 10 eine Brandschutzmanschette sein, die um ein Rohr gewickelt wird. Hierzu ist das Gehäuse 12 zumindest teilweise flexibel ausgebildet, sodass es um ein bestehendes Rohr gewickelt werden kann.

In Figur 2 ist eine zweite Ausführungsform des Brandschutzelements 10 gezeigt, die sich von der ersten Ausführungsform dahingehend unterscheidet, dass ein zusätzlicher Brandschutzstreifen 34 vorgesehen ist, welcher an der Innenseite 20 des Gehäuses 12 angeordnet ist, insbesondere in der seitlichen Vertiefung 28.

Das intumeszierende Material 22 ist unter anderem auf dem zusätzlichen Brandschutzstreifen 34 aufgebracht worden, sodass der zusätzliche Brandschutzstreifen 34 zwischen dem intumeszierenden Material 22 und der Innenseite 20 angeordnet ist.

Über den zusätzlichen Brandschutzstreifen 34 ist es möglich, dass ein intumeszierender Schaumstoff verwendet wird, der nur geringe Brandschutzadditive aufweist, wobei das Brandschutzelement 10 aufgrund des zusätzlichen Brandschutzstreifens 34 dennoch eine ausreichende Brandschutzfunktion hat.

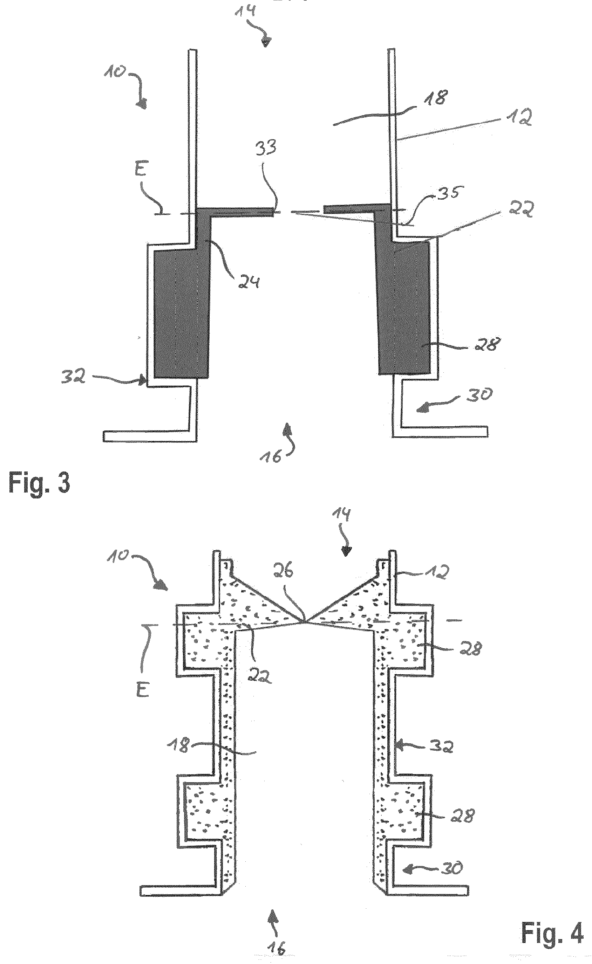

In Figur 3 ist eine dritte Ausführungsform des Brandschutzelements 10 gezeigt, bei der die Dichtebene E im Vergleich zu der in Figur 1 gezeigten Ausführungsform des Brandschutzelements 10 in Richtung der ersten Öffnung 14 im Gehäuse 12 verschoben ist.

Das intumeszierende Material 22 bildet das Dichtungselement 24 aus, welches in der gezeigten Ausführungsform den Kanal 18 jedoch nicht vollständig schließt. Eine derartige Ausbildung des intumeszierenden Materials 22 ist insbesondere dann geeignet, wenn das Brandschutzelement 10 für eine Rohrdurchführung vorgesehen ist.

Das freie Ende 33 des intumeszierenden Materials 22, das sich in zentripetaler Richtung von der Innenseite 20 in Richtung zur Mitte des Kanals 18 erstreckt, bildet eine Dichtlippe aus, die sich an das durchgeführte Rohr anschmiegt und so eine Abdichtung in der entsprechenden Dichtebene E sicherstellt.

Das die Dichtebene E bildende intumeszierende Material 22 bzw. die so ausgebildete Dichtlippe dient dabei als eine flexible Führung 35 für das durch den Kanal 18 geführte Rohr.

In Figur 4 ist eine vierte Ausführungsform des Brandschutzelements 10 gezeigt, bei der das Gehäuse 12 mehrere seitliche Vertiefungen 28 aufweist.

Darüber hinaus ist die Dichtebene E auch in dieser Ausführungsform gegenüber der ersten Ausführungsform zur ersten Öffnung 14 hin verschoben.

Aufgrund der mehreren seitlichen Vertiefungen 28, in denen das intumeszierende Material 22 jeweils formschlüssig aufgenommen ist, ist sichergestellt, dass das Dichtungselement 24 auch dann ausreichend gehalten ist, wenn keine dauerhafte Haftung des intumeszierenden Materials 22 am Gehäuse 12 gewährleistet werden kann.

Die konkrete Ausbildung des intumeszierenden Materials 22, insbesondere des Dichtungselements 24, sowie die Anordnung des intumeszierenden Materials 22 an der Innenseite 20 des Gehäuses 12 hängt jeweils vom Einsatzgebiet sowie dem Anwendungsgebiet des Brandschutzelements 10 ab.

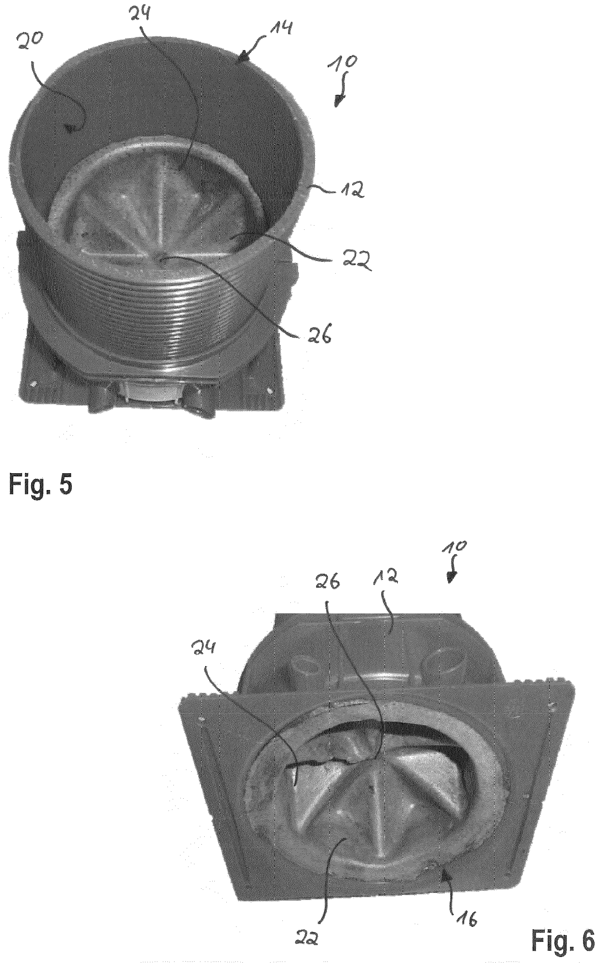

In den Figuren 5 und 6 ist eine fünfte Ausführungsform des Brandschutzelements 10 gezeigt, bei der das intumeszierende Material 22 ebenfalls eine Dichtmembran im Kanal 18 ausbildet, die einen Bereich 26 mit geringerer Materialstärke in axialer Richtung aufweist, der als Sollbruchstelle bzw. Durchstoßstelle für die zumindest eine Leitung und/oder das Rohr dient.

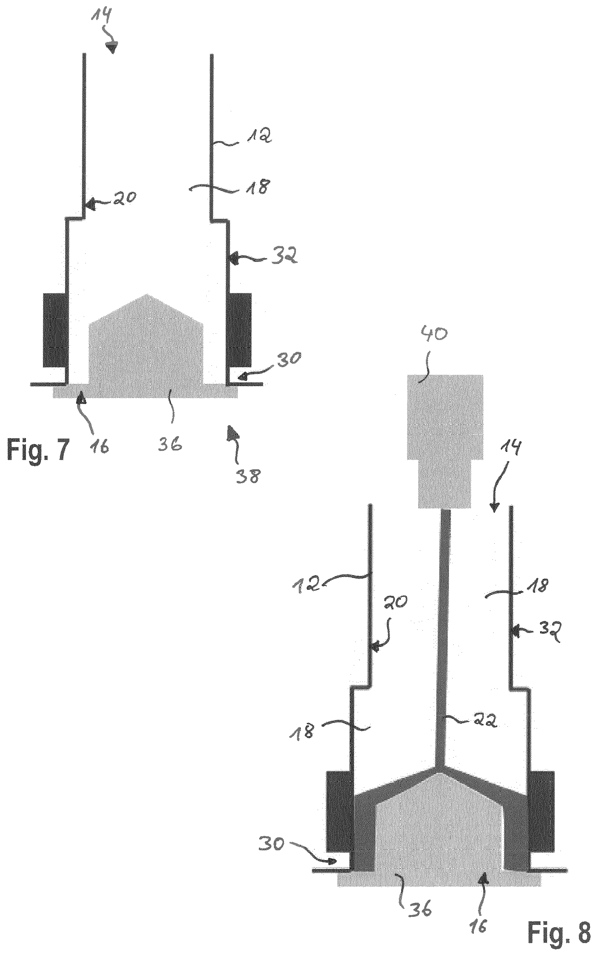

In den Figuren 7 bis 10 ist gezeigt, wie ein erfindungsgemäßes Brandschutzelement 10 hergestellt wird, was nachfolgend erläutert wird.

Zunächst wird das Gehäuse 12 bereitgestellt, wobei ein erstes Profilelement 36 eines Werkzeugs 38 in den Kanal 18 eingebracht wird (siehe Figur 7). In der gezeigten Ausführungsform wird das erste Profilelement 36 über die zweite Öffnung 16 des Gehäuses 12 in den Kanal 18 eingebracht.

Anschließend wird das intumeszierende Material 22 in den Kanal 18 eingebracht (siehe Figur 8), sodass es den Kanal 18 in Abhängigkeit von der Form des ersten Profilelements 36 zumindest teilweise füllt. Hierbei kann eine Dosiereinheit 40 verwendet werden, um die Menge des intumeszierenden Materials 22 einzustellen.

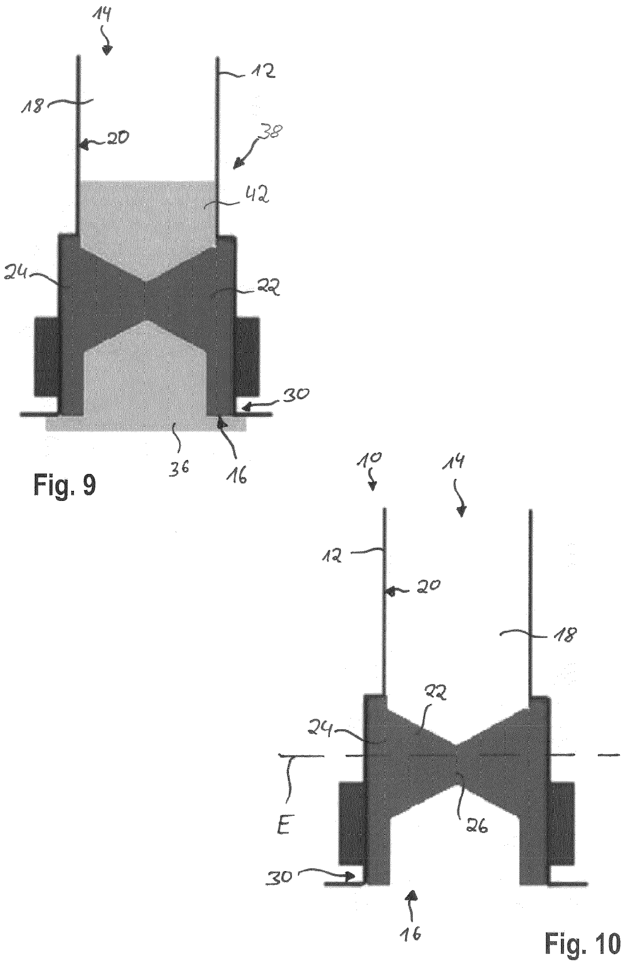

Anschließend wird ein zweites Profilelement 42 des Werkzeugs 38 in den Kanal 18 eingebracht (siehe Figur 9), insbesondere über die erste Öffnung 14, sodass das Werkzeug 38 geschlossen ist.

Die beiden Profilelemente 36, 42 liegen sich dabei gegenüber, sodass das zuvor eingebrachte intumeszierende Material 22 von den beiden Profilelementen 36, 42 eingeklemmt und entsprechend ihrer Formen geformt wird.

Das intumeszierende Material 22 härtet anschließend in der geschlossenen Stellung des Werkzeugs 38 aus.

Abschließend werden die Profilelemente 36, 42 entfernt bzw. das Werkzeug 38 geöffnet (siehe Figur 10), sodass das intumeszierende Material 22 das Dichtungselement 24 ausbildet, welches im Kanal 18 des Brandschutzelements 10 angeordnet ist.

In Abhängigkeit vom gewählten intumeszierenden Material 22 kann dieses an die Innenseite 20 des Kanals 18 angespritzt werden, insbesondere an die Innenseite 20 geschäumt werden.

In der gezeigten Ausführungsvariante des Herstellungsverfahrens weisen beide Profilelemente 36, 42 des Werkzeugs 38 ein im Querschnitt kegelförmiges Profil auf. Hierdurch lässt sich in einfacher Weise der Bereich 26 mit geringerer Materialstärke in axialer Richtung ausbilden.

Es können aber auch andere Querschnitte und Profile des intumeszierenden Materials 22 bzw. des Dichtungselements 24 erreicht werden, indem entsprechende Profilelemente 36, 42 des Werkzeugs 38 verwendet werden.

Generell kann so ein Brandschutzelement 10 in einfacher Weise kostengünstig hergestellt werden, da wenige Komponenten verwendet werden.

Darüber hinaus ist der Montageaufwand deutlich reduziert, da das intumeszierende Material 22 direkt an das Gehäuse 12 angespritzt ist, sodass eine nachträgliche Montage des intumeszierende Materials 22 oder einer das intumeszierende Material 22 aufweisenden Komponente nicht erforderlich ist.

Das intumeszierende Material 22 weist zudem mehrere Funktionen gleichzeitig auf, da es einerseits die Brandschutzfunktion und andererseits die Dichtigkeit des Brandschutzelements 10 gegenüber Rauchgas bereitstellt.

## Patentansprüche

1. Brandschutzelement (10) mit einem im Wesentlichen zylindrischen Gehäuse (12), das eine Innenseite (20) hat, die einen Kanal (18) für zumindest eine Leitung und/oder ein Rohr definiert, und wobei ein intumeszierendes Material (22) zumindest abschnittsweise direkt an die Innenseite (20) des Gehäuses (12) angespritzt ist, insbesondere direkt an die Innenseite (20) geschäumt ist.

2. Brandschutzelement (10) nach Anspruch 1, **dadurch gekennzeichnet, dass** das intumeszierende Material (22) stoffschlüssig mit der Innenseite (20) des Gehäuses (12) verbunden ist, insbesondere haftmittelfrei an der Innenseite (20) haftet.

3. Brandschutzelement (10) nach Anspruch 1 oder 2, **dadurch gekennzeichnet, dass** das intumeszierende Material (22) ein intumeszierender Schaumstoff ist.

4. Brandschutzelement (10) nach einem der vorhergehenden Ansprüche, **dadurch gekennzeichnet, dass** das Gehäuse (12) wenigstens eine seitliche Vertiefung (28) an der Innenseite (20) aufweist, die unter anderem als Aufnahmeabschnitt für das intumeszierende Material (22) dient.

5. Brandschutzelement (10) nach einem der vorhergehenden Ansprüche, **dadurch gekennzeichnet, dass** ein zusätzlicher Brandschutzstreifen (34) an der Innenseite (20) befestigt ist, insbesondere in der Vertiefung (28).

6. Brandschutzelement (10) nach Anspruch 5, **dadurch gekennzeichnet, dass** der zusätzliche Brandschutzstreifen (34) zwischen dem intumeszierenden Material (22) und der Innenseite (20) angeordnet ist.

7. Brandschutzelement (10) nach einem der vorhergehenden Ansprüche, **dadurch gekennzeichnet, dass** das intumeszierende Material (22) ein Dichtungselement (24) im Kanal (18) ausbildet, insbesondere eine Dichtmembran.

8. Brandschutzelement (10) nach einem der vorhergehenden Ansprüche, **dadurch gekennzeichnet, dass** das intumeszierende Material (22) derart ausgebildet ist, dass das intumeszierende Material (22) den Kanal (18) vollständig schließt.

9. Brandschutzelement (10) nach einem der vorhergehenden Ansprüche, **dadurch gekennzeichnet, dass** das intumeszierende Material (22) einen Bereich (26) mit geringerer Materialstärke in axialer Richtung aufweist, wobei der Bereich (26) als Sollbruchstelle oder Durchstoßstelle dient.

10. Brandschutzelement (10) nach einem der vorhergehenden Ansprüche, **dadurch gekennzeichnet, dass** das Gehäuse (12) aus einem biegesteifen Material gebildet ist, insbesondere aus einem Kunststoff wie Polyethylen oder Polypropylen, sodass das Gehäuse (12) stabilisierend ist.

11. Brandschutzelement (10) nach einem der vorhergehenden Ansprüche, **dadurch gekennzeichnet, dass** das Gehäuse (12) zumindest eine Öffnung (14, 16) hat, die in den Kanal (18) mündet, insbesondere zwei Öffnungen (14, 16), die über den Kanal (18) miteinander in Verbindung stehen.

12. Brandschutzelement (10) nach einem der vorhergehenden Ansprüche, **dadurch gekennzeichnet, dass** das Gehäuse (12) in axialer Richtung gesehen wenigstens einen Hinterschnitt (30) an seiner Außenseite (32) aufweist, über den das Brandschutzelement (10) an einem herzustellenden Bauteil befestigbar ist.

13. Verfahren zur Herstellung eines Brandschutzelements (10), insbesondere nach einem der vorhergehenden Ansprüche, mit den folgenden Schritten
a) ein im Wesentlichen zylindrisches Gehäuse (12) wird bereitgestellt, das zumindest eine Öffnung (14, 16) aufweist, die in einen Kanal (18) mündet, der von einer Innenseite (20) des Gehäuses (12) definiert ist,
b) ein erstes Profilelement (36) eines Werkzeugs (38) wird in den Kanal (18) eingebracht,
c) intumeszierendes Material (22) wird in den Kanal (18) eingebracht, sodass es den Kanal (18) in Abhängigkeit von der Form des eingebrachten Profilelements (36) zumindest teilweise füllt,
d) ein zweites Profilelement (42) des Werkzeugs (38) wird über die zumindest eine Öffnung (14, 16) in den Kanal (18) eingebracht, sodass das Werkzeug (38) geschlossen ist, wobei das zweite Profilelement (42) dem ersten Profilelement (36) gegenüberliegt, sodass das zuvor eingebrachte intumeszierende Material (22) von den beiden Profilelementen (36, 42) eingeklemmt und entsprechend geformt wird,
e) das intumeszierende Material (22) wird ausgehärtet, und
f) die Profilelemente (36, 42) werden entfernt.

14. Brandschutzelement (10) nach Anspruch 13, **dadurch gekennzeichnet, dass** das erste Profilelement (36) über eine zweite Öffnung (14, 16) des Gehäuses (12) eingebracht wird, die an dem der ersten Öffnung (14, 16) entgegengesetzten Ende des Gehäuses (12) vorgesehen ist, insbesondere dem gegenüberliegenden Ende.

15. Brandschutzelement (10) nach Anspruch 13 oder 14, **dadurch gekennzeichnet, dass** das intumeszierende Material (22) an die Innenseite (20) des Gehäuses (12) angespritzt wird, insbesondere geschäumt wird.
